## Europäisches Patentamt
## European Patent Office
## Office européen des brevets

(19)

(11) Veröffentlichungsnummer : **0 145 880 B1**

(12) **EUROPÄISCHE PATENTSCHRIFT**

(45) Veröffentlichungstag der Patentschrift :
**20.01.88**

(21) Anmeldenummer : **84112221.1**

(22) Anmeldetag : **11.10.84**

(51) Int. Cl.⁴ : **B 29 C 39/10, B 41 J 3/04**

(54) **Vorrichtung für die Herstellung eines Tintendruckkopfes.**

(30) Priorität : **28.11.83 DE 3343028**

(43) Veröffentlichungstag der Anmeldung :
**26.06.85 Patentblatt 85/26**

(45) Bekanntmachung des Hinweises auf die Patenterteilung : **20.01.88 Patentblatt 88/03**

(84) Benannte Vertragsstaaten :
**DE FR GB IT NL SE**

(56) Entgegenhaltungen :
**DE-A- 2 453 048
DE-A- 2 808 274**

(73) Patentinhaber : **Nixdorf Computer Aktiengesellschaft
Fürstenallee 7
D-4790 Paderborn (DE)**

(72) Erfinder : **Roeschlein, Rolf
Karl-Arnold-Strasse 26
D-4790 Paderborn (DE)**
Erfinder : **Schulte, Heinz
Weisgutstrasse 45
D-4790 Paderborn (DE)**

(74) Vertreter : **Patentanwälte Schaumburg & Thoenes
Mauerkircherstrasse 31 Postfach 86 07 48
D-8000 München 80 (DE)**

EP 0 145 880 B1

## Beschreibung

Die Erfindung betrifft eine Vorrichtung für die Herstellung eines Tintendruckkopfes mit mindestens einem von einem rohrförmigen piezoelektrischen Antriebselement umgebenen Tintenkanal, der in einem ihn allseitig umschließenden Kunststoffvergußteil auszubilden ist, zur Positionierung des bzw. der Antriebselemente und eines oder mehrerer den bzw. die Tintenkanäle definierender, nach dem Verguß aus dem Kunststoffvergußteil zu entfernender nadelartiger Kanalelemente.

Aus der DE-AS 25 43 420 ist ein Tintendruckkopf der vorstehend beschriebenen Ausbildung bekannt. Ein solcher Tintendruckkopf wird im Kunststoff-Gießverfahren hergestellt, wozu das für den jeweils auszubildenden Tintenkanal vorzusehende nadelartige Kanalelement in das jeweilige Antriebselement eingeführt und die so gebildete Anordnung in eine Gießform eingesetzt werden muß. Wird ein Tintendruckkopf mit nur einem einzigen Tintenkanal hergestellt, so ist die Anordnung des nadelartigen Kanalelements zusammen mit seinem Antriebselement in der Gießform relativ unkritisch. Wird jedoch ein Tintendruckkopf mit einer Vielzahl von Tintenkanälen hergestellt, so müssen die entsprechend vorhandenen nadelartigen Kanalelemente sowie die Antriebselemente eine genau vorgegebene Lage relativ zueinander und zu den im Tintendruckkopf vorn auszubildenden Düsenöffnungen haben, damit sich für alle Tintenkanäle gleichartige mechanische und elektrische Eigenschaften ergeben. Hierzu ist eine entsprechend genaue Zentrierung der nadelartigen Kanalelemente zu den Antriebselementen erforderlich, denn zwischen der Innenwand eines Antriebselements und dem letztlich auszubildenden Tintenkanal soll eine möglichst homogene Kunststoffschicht ausgebildet werden, um elektrische Kurzschlüsse zwischen der Innenseite und der Außenseite des jeweiligen Antriebselements zu verhindern, die auftreten können, wenn die durch die Tintenkanäle zu führende Schreibflüssigkeit mit der porösen Innenseite des aus keramischem Material bestehenden Antriebselements direkt in Berührung kommt und dieses Material durchsetzt. Bei dem vorbekannten Tintendruckkopf wird eine Metallspirale in das jeweilige Antriebselement eingeführt, durch die dann das nadelartige Kanalelement hindurchgeführt wird. Auf diese Weise entsteht zwischen den einzelnen Windungen der Metallspirale beim Vergießen die Kunststoffschicht an der Innenseite des Antriebselements. Gleichzeitig wird dadurch ein Zentrieren des nadelartigen Kanalelements in dem Antriebselement erreicht.

Das Einsetzen solcher aus nadelartigen Kanalelementen und Antriebselementen bestehender Anordnungen in eine Gießform ist aber kompliziert, denn die Gießform hat kleine Abmessungen, und die Lage der Anordnungen relativ zueinander kann sich nach dem Einsetzen und vor dem Vergießen z. B. durch unsachgemäße Handhabung noch ändern, so daß der letztlich hergestellte Tintendruckkopf ggf. unbrauchbar sein kann. Es ist deshalb erforderlich, zur Herstellung eines Tintendruckkopfes vorbekannter Art besondere Vorrichtungen an der Gießform vorzusehen, die die vorderen bzw. hinteren Enden der nadelartigen Kanalelemente in vorgegebener Lage relativ zueinander halten, damit die vorderen und hinteren Öffnungen der Tintenkanäle eine entsprechend vorgegebene Verteilung erhalten. Solche Vorrichtungen können aber nicht gewährleisten, daß auch die Antriebselemente im Inneren des Tintendruckkopfes eine genau vorgegebene Lage relativ zueinander und einen genau vorgegebenen Abstand zu den vorderen Öffnungen der Tintenkanäle einnehmen. Diese genau vorgegebene Lage muß einzeln justiert werden. Solche Arbeiten erhöhen aber den Herstellungsaufwand für einen Tintendruckkopf beachtlich, und mit zunehmendem Einsatz solcher Vorrichtungen und entsprechend großer Stückzahl in der Herstellung ist eine möglichst weitgehende Vereinfachung insbesondere bei der Vormontage der Elemente eines Tintendruckkopfs anzustreben.

Es ist deshalb Aufgabe der Erfindung, eine Möglichkeit zur Vormontage für die Einzelelemente eines Tintendruckkopfes vor dem Vergießen anzugeben, die bei einfachster Handhabung eine höchstmögliche Lagegenauigkeit der Einzelelemente relativ zueinander und im Inneren des Tintendruckkopfes gewährleistet und darüber hinaus zu einer gegenüber bisherigen Möglichkeiten weitgehenden Verringerung des für die Vormontage erforderlichen Zeitaufwandes führt.

Diese Aufgabe wird für eine Vorrichtung eingangs genannter Art erfindungsgemäß gelöst durch einen die Gießform des Kunststoffvergußteils begrenzenden Montagebock zum lösbaren Halten einer Zentrierplatte für das jeweilige Kanalelement im Bereich der vorderen Austrittsöffnung des jeweiligen Tintenkanals und zum lösbaren Halten eines Haltekörpers für das jeweilige Antriebselement in zur Zentrierplatte vorgegebener und zu seinem Kanalelement zentrierter Lage.

Eine Vorrichtung nach der Erfindung ermöglicht ein einfaches und schnelles Zusammensetzen der Einzelelemente eines Tintendruckkopfes, denn der Montagebock hält einerseits eine Zentrierplatte, die die Lage der vorderen Düsenöffnungen der zu bildenden Tintenkanäle bestimmt, andererseits hält er einen besonderen Haltekörper in vorbestimmtem Abstand zu der Zentrierplatte, der das bzw. die Antriebselemente aufnimmt. Ein solcher Haltekörper kann leicht eine derartige Formgebung haben, daß an ihm das jeweilige Antriebselement und das jeweilige Kanalelement zueinander zentriert gehalten werden. Dadurch, daß der Haltekörper mit dem Montagebock verbunden ist, der den Abstand der vorderen Zentrierplatte zum Haltekörper bestimmt, der Haltekörper seinerseits aber das Antriebselement mit dem Kanalelement in vorgegebener Lage halten kann, werden durch einfaches Zusammensetzen

dieser Elemente die für den Tintendruckkopf zu fordernden genauen Lagebeziehungen zwischen Kanalelementen, Antriebselementen und vorderen Düsenöffnungen bei schneller und einfacher Vormontage erfüllt. Die so zusammengesetzte Gesamtanordnung aus Montagebock, Zentrierplatte und Haltekörper mit daran gehaltenen Antriebselementen und Kanalelementen kann in großen Stückzahlen vorgefertigt werden. Auch ist eine Prüfung der elektrischen Funktionsfähigkeit der Antriebselemente nach deren Beschaltung unter ggf. zusätzlicher Feinjustierung möglich, und die dann mit der elektrischen Beschaltung versehene vormontierte Gesamtanordnung kann in eine Gießform eingesetzt werden, ohne daß eine Veränderung der Lagebeziehungen der Einzelelemente des Tintendruckkopfs zu befürchten ist. Da der Montagebock mit der Zentrierplatte und dem Haltekörper lösbar verbunden ist und die Gießform des Kunststoff-Vergußteils begrenzt, kann er nach Aushärten der Vergußmasse von dem dann gebildeten Kunststoffvergußteil abgelöst werden und dient dann wieder zur Vormontage einer anderen Anordnung beschriebener Art.

Der Haltekörper bildet also ein verlorenes Konstruktionselement für den Tintendruckkopf. Dies bedeutet aber keinen zusätzlichen Materialaufwand, da ein seinem Volumen entsprechendes Volumen an Vergußmasse eingespart wird.

Wie noch gezeigt wird, kann der Haltekörper bei einer Vorrichtung nach der Erfindung in sehr einfacher Weise zur Aufnahme einer Vielzahl von Antriebselementen und Kanalelementen verwirklicht werden, insbesondere wenn die Halterungen für diese Elemente als Klemmelemente ausgebildet sind. Auf diese Weise wird erreicht, daß das jeweilige Antriebselement mit dem Haltekörper durch Eindrücken und dadurch verursachtes Einschnappen verklemmt wird und so in einer genau vorgegebenen Lage unverrückbar gehalten ist, ohne daß hierzu besonders zu betätigende Halteelemente erforderlich wären. Es ist auch möglich, nach diesem Prinzip einen Haltekörper zu fertigen, der nur für ein einziges Antriebselement mit zugeordnetem Kanalelement geeignet ist und solche einzelnen Haltekörper zu einer Gesamtanordnung mehrerer Haltekörper zu bündeln. In jedem Falle ist es zweckmäßig, den Haltekörper als Spritzguß-Kunststoffteil herzustellen, da nach dieser Technik Haltefunktionen der vorstehend beschriebenen Art verhältnismäßig einfach zu verwirklichen sind und entsprechendes Kunststoffmaterial mit dem Vergußmaterial des Tintendruckkopfes verträglich ist.

Die Erfindung wird im folgenden anhand der Figuren beschrieben. Es zeigen :

Fig. 1 einen Tintendruckkopf in schematischer Darstellung,

Fig. 2 eine Seitenansicht einer Vorrichtung nach der Erfindung als Ausführungsbeispiel,

Fig. 3 eine Rückansicht des Montagebocks der Vorrichtung nach Fig. 2,

Fig. 4 den Schnitt IV-IV aus Fig. 2 und

Fig. 5 ein weiteres Ausführungsbeispiel eines Haltekörpers in perspektivischer Darstellung.

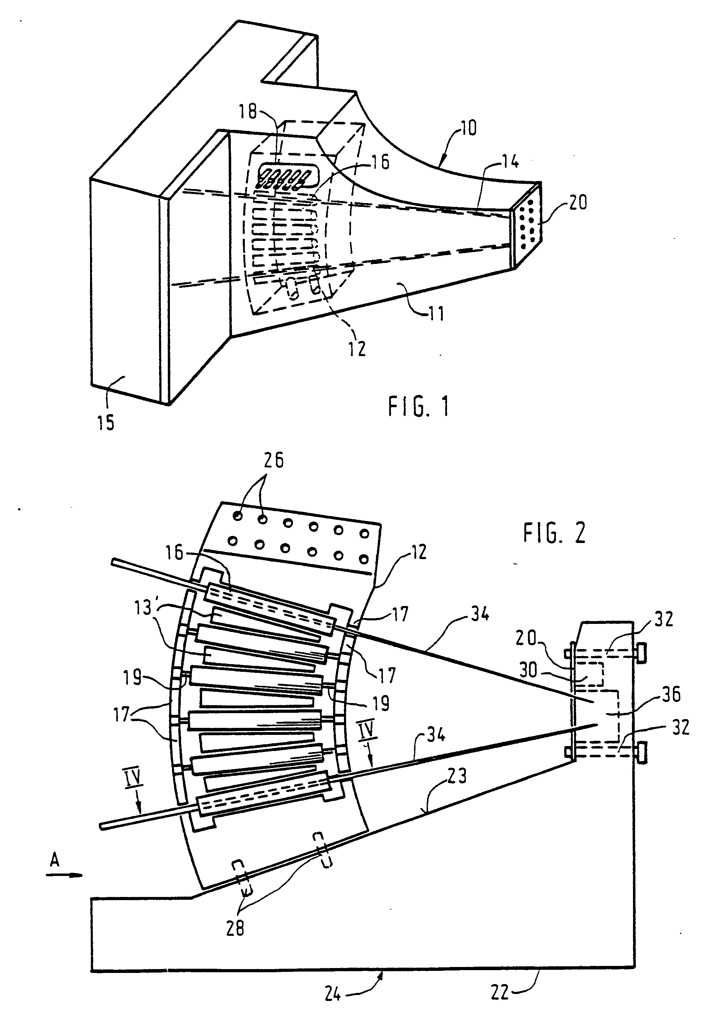

Fig. 1 zeigt in schematischer Darstellung einen Tintendruckkopf 10, in dessen nach vorn im wesentlichen konvergierendem Vorderteil 11 ein gestrichelt angedeuteter Haltekörper 12 eingegossen ist. Der Tintendruckkopf 10 besteht im wesentlichen aus einem im Gießverfahren aus dielektrischem Kunststoff hergestellten Werkstück. Er enthält mehrere Schreibflüssigkeit aufnehmende Tintenkanäle 14, die im hinteren, erweiterten Kopfteil 15 enden und dort in einer nicht dargestellten Tintenkammer mit Schreibflüssigkeit versorgt werden. Jeder Tintenkanal 14 wird von einem piezoelektrischen Antriebselement 16 zylinderförmig umfaßt. Bei Ansteuerung dieser piezoelektrischen Antriebselemente mit einem elektrischen Spannungsimpuls ziehen sich diese entsprechend impulsartig zusammen und stoßen dadurch die in den Tintenkanälen 14 enthaltene Schreibflüssigkeit an ihren vorderen Enden tröpfchenförmig aus.

Der eingegossene Haltekörper 12 hat die Aufgabe, die piezoelektrischen Antriebselemente 16 einerseits und die Tintenkanäle 14 definierende Freihaltenadeln (in Fig. 1 nicht dargestellt) vor dem Verguß zu positionieren derart, daß sich die Antriebselemente 16 und die Freihaltenadeln in genau definierter Lage relativ zueinander und zum Haltekörper 12 befinden. Außerdem wird ein Stecker 18 zur elektrischen Beschaltung des Tintendruckkopfes 10 vor dem Verguß am Haltekörper 12 in noch zu beschreibender Weise befestigt.

Auf der Seite der vorderen Tintenkanalaustrittsöffnungen wird der Tintendruckkopf 10 durch eine Zentrierplatte 20 begrenzt, mit der die die Tintenkanäle 14 definierenden Freihaltenadeln im Bereich der Tintenkanalaustrittsöffnungen vor und während des Vergusses gehalten werden. Die Zentrierplatte 20 kann nach Herstellung des Tintendruckkopfes 10 ggf. entfernt werden.

In Fig. 2 ist eine Seitenansicht eines Montagebocks 22 mit aufgestecktem Haltekörper 12 und aufgesetzter Zentiertplatte 20 gezeigt.

Diese Anordnung bildet eine Vorrichtung 24 für die Herstellung des in Fig. 1 gezeigten Tintendruckkopfes 10, die vor dem Verguß ein Vormontieren, Justieren und elektrisches Prüfen der Teile des Tintendruckkopfes 10 gestattet und dann als Einheit mit den Antriebselementen 16 und den Freihaltenadeln 34, von denen nur zwei dargestellt sind, in eine Gießform (nicht dargestellt) eingesetzt werden kann. Der Montagebock 22 selbst kann dabei ein Teil der Gießform sein.

Wie Fig. 2 zeigt, hat der Haltekörper 12 im wesentlichen Kreisringsegmentform, und die Antriebselemente 16 sind an ihm so gehalten, daß ihre Längsachsen bezüglich Fig. 2 nach rechts konvergieren. Die in den Antriebselementen 16 durch den Haltekörper 12 zentriert gehaltenen Freihaltenadeln 34 konvergieren entsprechend zur Zentrierplatte 20 hin. Diese Anordnung bestimmt die anhand der Fig. 1 bereits erläuterte Form des Vorderteils 11.

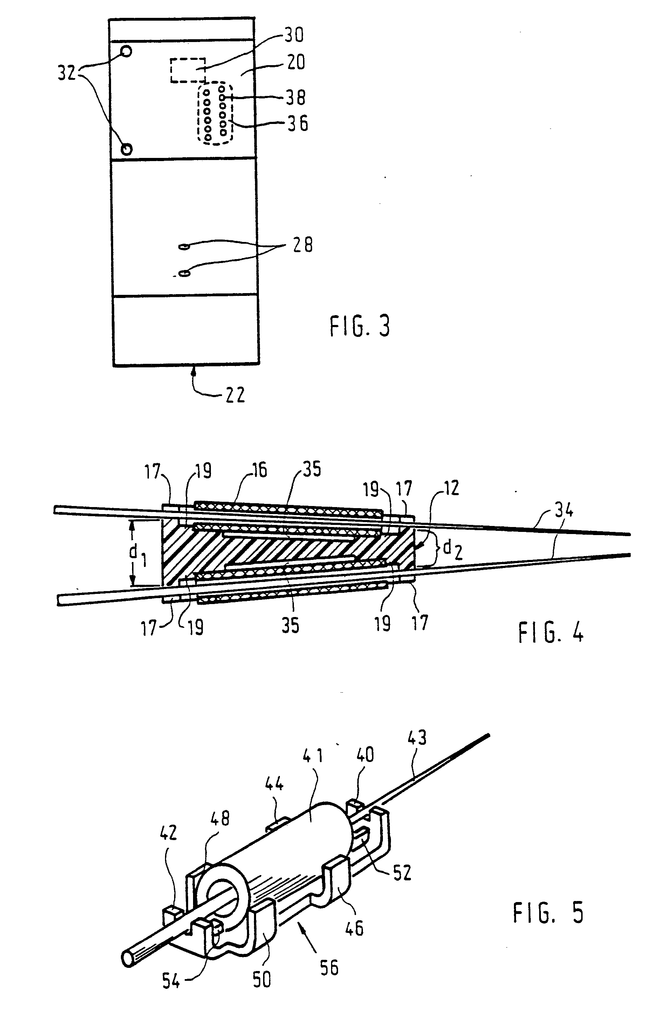

Der Haltekörper 12 kann im wesentlichen plattenförmig sein und Antriebselemente sowie Freihaltenadeln auch auf seiner in Fig. 2 nicht sichtbaren Seite tragen. Wie noch deutlicher in Fig. 4 gezeigt, sind die Antriebselemente 16 und die Freihaltenadeln 34 an dem Haltekörper 12 dadurch gehalten, daß sie zwischen für sie vorgesehene, aus der Plattenebene ragende Klemmelemente 13 bzw. 17 eingedrückt werden. Die Klemmelemente 13 bilden zwischen sich somit Aufnahmekanäle oder Klemmnuten für die Antriebselemente, die vorn und hinten durch stegartige Anschläge 19 begrenzt und so entsprechend der Länge der Antriebselemente 16 bemessen sind. Die Klemmelemente 17 bilden einen vorderen bzw. hinteren Randsteg, der die durch die Aufnahmekanäle hervorgerufene Vertiefung des Haltekörpers 12 begrenzt und zwischen den Klemmelementen 17 gleichfalls Klemmnuten aufweist.

An dem in Fig. 2 oberen Ende des Haltekörpers 12 sind mehrere Vertiefungen 26 vorgesehen, die zum späteren Einsetzen der Stifte eines Anschlußsteckers dienen.

Der Montagebock 22 hat eine dem Haltekörper 12 zugewandte Fläche 23, die Begrenzungsfläche für den Vorderteil 11 (Fig. 1) des Tintendruckkopfes 10 ist und somit ein Formelement darstellt. Der in Fig. 2 rechte Teil des Montagebocks 22 steht bis in den Bereich der vorderen Enden der Freihaltenadeln 34 und hat dort einen Hohlraum 36, in den diese Enden hineinragen. Dieser Hohlraum kann ggf. auch einen Einsatz aus einem elastomeren Material enthalten, in das die Freihaltenadeln 34 hineinstechen, wenn sie durch die Zentrierplatte 20 hindurchgesteckt werden.

Die Zentrierplatte 20 ist in vorgegebener Verteilung mit Bohrungen 38 (Fig. 3) versehen, durch die die Freihaltenadeln 34 hindurchgesteckt werden, wenn die in Fig. 2 gezeigte Anordnung zusammengesetzt wird. Dadurch wird die Lage der vorderen Düsenöffnungen der beim Verguß auszubildenden Tintenkanäle 14 (Fig. 1) definiert. Zur lagerichtigen Fixierung der Zentrierplatte 20 an dem Montagebock 22 dienen ein in diesen eingelassener Permanentmagnet 30 sowie Stifte 32, die durch den Montagebock 22 sowie entsprechende Bohrungen der Zentrierplatte 20 gesteckt sind. Bei dieser Befestigungsart besteht die Zentrierplatte 20 vorteilhaft aus Nickel. Bei 28 sind in Fig. 2 Verbindungsstifte angedeutet, die den Montagebock an seiner Fläche 23 mit dem Haltekörper 12 verbinden. Diese Verbindungsstifte können als separate Elemente vorgesehen oder auch mit dem Montagebock 22 fest verbunden sein.

Fig. 3 zeigt den Montagebock 22 in Blickrichtung A gemäß Fig. 2. Hier ist die gegenseitige Zuordnung der Einzelememente im Bereich der Zentrierplatte 20 zu erkennen. Insbesondere zeigt Fig. 3 eine vorgegebene Anordnung von zwölf Bohrungen 38 für die Freihaltenadeln 34 (Fig. 2). Diese Anordnung wird zur Herstellung eines Tintenmosaikdruckkopfes verwendet und ist an sich bekannt. Ferner sind der Hohlraum 36 und der Permanentmagnet 30 gestrichelt angedeutet, da sie in der Ansicht gemäß Fig. 3 hinter der Zentrierplatte 20 liegen.

Fig. 4 zeigt den Schnitt IV-IV des in Fig. 2 dargestellten Haltekörpers 12. Dieser trägt an seinen beiden Seiten die Antriebselemente 16 in beschriebener Weise zwischen den Klemmelementen 13 (Fig. 2), die in Fig. 4 nicht erkennbar sind, da sie in dem dargestellten Ausführungsbeispiel kürzer und niedriger als die Antriebselemente 16 sind. Es sind aber die Klemmelemente 17 zu erkennen, die die Freihaltenadeln 34 dadurch zu den Antriebselementen 16 zentriert halten, daß sie auch in vorgegebener Höhenlage zwischen ihnen fixiert sind. Dies ist durch eine vorgegebene Dicke d1 bzw. d2 des Haltekörpers 12 an seinen Längskanten sowie durch eine entsprechend vorgegebene Dicke des Haltekörpers 12 im Bereich der vorderen bzw. hinteren Enden der Antriebselemente 16 gewährleistet, so daß die zwischen den Klemmelementen 13 und 17 ausgebildeten Klemmnuten durch ihre jeweilige Tiefe die Zentrierung gewährleisten.

Schließlich sind in der Schnittdarstellung gemäß Fig. 4 auch die stegartigen Anschläge 19 zu erkennen, durch die die Antriebselemente 16 in Richtung ihrer Längsachse fixiert sind.

Fig. 4 zeigt ferner für jedes Antriebselement 16 eine Vertiefung 35 im Haltekörper 12, die einen Freiraum bildet, der beim späteren Vergußvorgang mit Vergußmasse ausgefüllt wird, so daß das jeweilige Antriebselement 16 bis auf die Stellen, an denen es zwischen den Klemmelementen 13 (Fig. 2) gehalten ist, möglichst allseitig mit Vergußmasse eingeschlossen ist.

Der in Fig. 4 gezeigte Haltekörper 12 hat einen Querschnitt, der allgemein dem konvergierenden Verlauf der mit den Freihaltenadeln 34 zu bildenden Tintenkanäle 14 (Fig. 1) angepaßt ist. Gleiches gilt für die anhand der Fig. 2 beschriebene Form des Haltekörpers 12 als Kreisringsegment. Dieses hat eine Krümmung, die der Konvergenz der Freihaltenadeln bzw. der Antriebselemente 16 angepaßt ist.

Eine andere Ausführungsform eines Haltekörpers 56 für ein piezoelektrisches Antriebselement 41 und für eine ihm zugeordnete Freihaltenadel 43 ist in Fig. 5 perspektivisch gezeigt. Es ist hier eine Einzelanordnung dieser Elemente dargestellt. Mehrere solcher Einzelanordnungen können gebündelt werden, um einen Tintendruckkopf mit mehreren Tintenkanälen herzustellen. Ebenso ist auch die Herstellung eines Tintendruckkopfes mit nur einem Tintenkanal denkbar.

Bei der in Fig. 5 gezeigten Anordnung wird in einem vorderen U-Stück 40 und einem hinteren U-Stück 42 eine Freihaltenadel 43 verklemmt.

Das piezoelektrische Antriebselement 41 wird zwischen Backen 44 und 46 bzw. 48 und 50 verklemmt. Es wird ferner in Längsrichtung zwischen zwei Anschlägen 52 und 54 fixiert. Auch hier ist zu erkennen, daß die Klemmelemente in Form der U-Stücke 40 und 42 sowie der Backen 44, 46, 48 und 50 aus der Plattenebene des Haltekörpers 56 herausragen.

In beiden zuvor beschriebenen Ausführungsformen ist der Haltekörper 12 bzw. 56 zweckmäßig ein Kunststoff-Spritzgußteil aus möglichst durchsichtigem Material, so daß im Falle der Verwendung durchsichtigen Vergußmaterials für den herzustellenden Tintendruckkopf später dessen Innenraum sichtbar ist.

Der Aufbau der Vorrichtung 24 (Fig. 2) erfolgt in mehreren Schritten.

Zunächst werden die piezoelektrischen Antriebselemente 16 zwischen die Klemmelemente 13 des Haltekörpers 12 eingedrückt und verklemmt.

Nach dem Verankern aller piezoelektrischen Antriebselemente 16 im Haltekörper 12 werden die Steckerstifte einer mit einem Stecker versehenen flexiblen Leiterplatte (nicht dargestellt) mit ihren einen Enden in die Vertiefungen 26 des Haltekörpers 12 gesteckt, und die Leiterplatte wird um den Haltekörper 12 herumgefaltet. Zum Freihalten der freien Enden der Steckerstifte von Vergußmasse und des Raums für den Gegenstecker wird über die freien Enden der Steckerstifte ein diesem Raum entsprechender Silikonkautschukblock (nicht dargestellt) gestülpt, der nach dem Verguß zu entfernen ist.

Als nächster Schritt wird die flexible Leiterplatte durch Lötpunkte auf die Außenseiten der zu kontaktierenden piezoelektrischen Antriebselemente 16 gelötet. Bei den verwendeten Antriebselementen 16 ist deren innere Elektrode über ihre Stirnseite nach außen geführt und dort zugänglich, so daß eine einfache Kontaktierung möglich ist. Der Druck des Lötkolbens auf die Antriebselemente 16 wirkt dabei in die gleiche Richtung wie die zu deren Verankern erforderliche Kraft. Es wird darum durch den Lötvorgang die Lage der Antriebselemente 16 nicht mehr verändert.

Anschließend wird der Haltekörper 12 mit den Verbindungsstiften 28 auf den Montagebock 22 aufgesteckt.

Als weiterer Schritt wird die Zentrierplatte 20 mit Hilfe des in dem Montagebock 22 vorgesehenen Permanentmagneten 30 am Montagebock 22 befestigt. Die Position der Zentrierplatte 20 wird durch die zwei Zentrierstifte 32 bestimmt.

Den letzten Schritt der Vormontage der Vorrichtung 24 stellt das Positionieren der Freihaltenadeln 34 dar. Die Freihaltenadeln 34 werden dabei durch die rohrförmigen piezoelektrischen Antriebselemente 16 geschoben, mit ihrer Spitze durch die Tintenkanalöffnungen 38 (Fig. 3) der Zentrierplatte 20 hindurchgesteckt und zwischen die Klemmelemente 17 des Haltekörpers 12 eingedrückt.

**Patentansprüche**

1. Vorrichtung für die Herstellung eines Tintendruckkopfes mit mindestens einem von einem rohrförmigen piezoelektrischen Antriebselement umgebenen Tintenkanal, der in einem ihn allseitig umschließenden Kunststoffvergußteil auszubilden ist, zur Positionierung des bzw. der Antriebselemente und eines oder mehrerer den bzw. die Tintenkanäle definierender, nach dem Verguß aus dem Kunststoffvergußteil zu entfernender nadelartiger Kanalelemente, gekennzeichnet durch einen die Gießform des Kunststoffvergußteils begrenzenden Montagebock (22) zum lösbaren Halten einer Zentrierplatte (20) für das jeweilige Kanalelement (34 ; 43) im Bereich der vorderen Austrittsöffnung des jeweiligen Tintenkanals (14) und zum lösbaren Halten eines Haltekörpers (12 ; 56) für das jeweilige Antriebselement (16 ; 41) in zur Zentrierplatte (20) vorgegebener und zu seinem Kanalelement (34 ; 43) zentrierter Lage.

2. Vorrichtung nach Anspruch 1, dadurch gekennzeichnet, daß der Haltekörper (12 ; 56) mindestens eine Halterung für ein Antriebselement (16 ; 41) und eine Halterung für das ihm zugeordnete Kanalelement (34 ; 43) aufweist.

3. Vorrichtung nach Anspruch 1 oder 2, dadurch gekennzeichnet, daß der Haltekörper (12 ; 56) plattenförmig ausgebildet und mit angeformten, aus der Plattenebene ragenden Klemmelementen (13, 17 ; 40, 42, 44, 46, 48, 50) für das jeweilige Antriebselement (16 ; 41) und das ihm zugeordnete Kanalelement (34 ; 43) versehen ist.

4. Vorrichtung nach einem der Ansprüche 1 bis 3, dadurch gekennzeichnet, daß für das jeweilige Kanalelement (34 ; 43) vor und/oder hinter dem für ein Antriebselement (16 ; 41) vorgesehenen Raum eine Klemmnut in zu dem zu haltenden Antriebselement (16 ; 41) zentrierter Lage vorgesehen ist.

5. Vorrichtung nach Anspruch 3 oder 4, dadurch gekennzeichnet, daß zur Haltung des jeweiligen Antriebselements (16 ; 41) in vorgegebener Lage in einem der Länge des Antriebselements (16 ; 41) entsprechenden gegenseitigen Abstand aus der Plattenebene ragende Anschlagelemente (19 ; 52, 54) vorgesehen sind.

6. Vorrichtung nach einem der Ansprüche 3 bis 5, dadurch gekennzeichnet, daß auf beiden Seiten des plattenförmigen Haltekörpers (12) Klemmelemente (13, 17) und Anschlagelemente (19) vorgesehen sind.

7. Vorrichtung nach einem der Ansprüche 3 bis 6, dadurch gekennzeichnet, daß die Klemmelemente (13) zum Halten mehrerer Antriebselemente (16) als zwischen den Antriebselementen (16) stehende Wände ausgebildet sind.

8. Vorrichtung nach einem der Ansprüche 3 bis 7, dadurch gekennzeichnet, daß die Klemmelemente (17) zum Halten mehrerer Kanalelemente (34) Teile eines vor und/oder hinter den Räumen für die Antriebselemente (16) den Haltekörper begrenzenden Randsteges sind.

9. Vorrichtung nach einem der Ansprüche 1 bis 8 für die Herstellung eines Tintendruckkopfes mit zu den vorderen Austrittsöffnungen hin konvergierend angeordneten Tintenkanälen, dadurch gekennzeichnet, daß der Haltekörper (12) als Kreisringsegment mit einer der Konvergenz der Kanalelemente (34) entsprechenden Krümmung ausgebildet ist.

10. Vorrichtung nach einem der Ansprüche 1 bis 9, dadurch gekennzeichnet, daß der Haltekörper (12) an der dem Montagebock (22) zugewandten Seite Einstecköffnungen zur Aufnahme von Verbindungsstiften (28) aufweist.

11. Vorrichtung nach einem der Ansprüche 1 bis 10, dadurch gekennzeichnet, daß der Haltekörper (12 ; 56) ein durchsichtiges Kunststoff-Spritzteil ist.

12. Vorrichtung nach einem der Ansprüche 1 bis 11, dadurch gekennzeichnet, daß der Montagebock (22) einen Permanentmagneten (30) zum lösbaren Halten der Zentrierplatte (20) aufweist.

13. Vorrichtung nach einem der Ansprüche 1 bis 12, dadurch gekennzeichnet, daß der Montagebock (22) und die Zentrierplatte (20) aufeinander ausgerichtete Öffnungen zur Aufnahme mindestens eines einsteckbaren Zentrierstiftes (32) aufweisen.

14. Vorrichtung nach einem der Ansprüche 1 bis 13, dadurch gekennzeichnet, daß der Montagebock (22) im Bereich der durch die Kanalöffnungen (38) der Zentrierplatte (20) hindurchgesteckten Enden der Kanalelemente (34) einen Hohlraum (36) aufweist.

15. Vorrichtung nach einem der Ansprüche 1 bis 14, gekennzeichnet durch eine Zentrierplatte (20) aus Nickel.

## Claims

1. A device for the production of an ink printing head with at least one ink duct surrounded by a tubular piezo-electric driving element, which duct is to be formed in a plastic casting part surrounding said duct from all sides, for the positioning of the driving element(s) and of one or more needle-like channel member(s) defining the ink duct(s) to be removed after casting from the plastic casting part, characterised in an assembly rack (22) delimiting the casting mould of the plastic casting part for the removable holding of a centering plate (20) for the respective duct element (34 ; 43) in the area of the front outlet opening of the respective ink duct (14) and for the detachable holding of a holding member (12 ; 56) for the respective driving element (16 ; 41) in a position predetermined with respect to the centering plate (20) and centered with respect to its duct element (34 ; 43).

2. A device according to Claim 1, characterised in that the holding member (12 ; 56) has at least one holder for a driving element (16 ; 41) and one holder for the duct element (34 ; 43) associated with said driving element.

3. A device according to Claim 1 or 2, characterised in that the holding member (12 ; 56) is constructed platelike and is provided with swaged clamping elements (13, 17 ; 40, 42, 44, 46, 48, 50) protruding from the plate level for the respective driving element (16, 41) and for the duct element (34, 43) associated with the latter.

4. A device according to one of Claims 1 to 3, characterised in that for the respective duct element (34, 43) in front of and/or behind the space provided for a driving element (16, 41) a clamping groove is provided in a position centered with respect to the driving element (16, 41) to be held.

5. A device according to Claim 3 or 4, characterised in that for holding the respective driving element (16, 41) in predetermined position stop members (19 ; 52, 54) protruding out of the plate level are provided at a mutual distance corresponding to the length of the driving element (16 ; 41).

6. A device according to one of Claims 3 to 5, characterised in that clamping elements (13, 17) and stop elements (19) are provided on both sides of the plate-shaped holding member (12).

7. A device according to one of Claims 3 to 6, characterised in that the clamping elements (13) for holding several driving elements (16) are constructed as walls standing between the driving elements (16).

8. A device according to one of Claims 3 to 7, characterised in that the clamping elements (17) for holding several duct elements (34) are parts of an edge web delimiting the holding member in front of and/or behind the spaces for the driving elements (16).

9. A device according to one of Claims 1 to 8 for the production of an ink printing head with ink ducts disposed converging towards the front outlet openings, characterised in that the holding member (12) is constructed as a ring segment with a curvature corresponding to the convergence of the duct elements (34).

10. A device according to one of Claims 1 to 9, characterised in that the holding member (12) has on the side facing the assembly rack (22) insertion openings for receiving connecting pins (28).

11. A device according to one of Claims 1 to 10, characterised in that the holding member (12 ; 56) is a transparent plastic injection moulded part.

12. A device according to one of Claims 1 to 11, characterised in that the assembly rack (22) has a permanent magnet (30) for the detachable holding of the centering plate (20).

13. A device according to one of Claims 1 to 12, characterised in that the assembly rack (22) and the centering plate (20) have mutually directed openings to take up at least one insertable centering pin (32).

14. A device according to one of Claims 1 to 13, characterised in that the assembly rack (22) has a hollow space (36) in the area of the ends of the duct elements (34) inserted through the duct openings (36) of the centering plate (20).

15. A device according to one of Claims 1 to 14, characterised in a nickel centering plate (20).

## Revendications

1. Dispositif pour la fabrication d'une tête d'imprimante à jets d'encre ayant au moins un canal à encre entouré par un élément d'entraînement piézo-électrique tubulaire, qui est à former dans une pièce coulée en matière plastique l'entourant de tous côtés, pour le positionnement du ou des éléments d'entraînement et d'un ou de plusieurs éléments de canal du type d'une aiguille définissant le canal ou les canaux à encre à retirer après le moulage de la pièce coulée en matière plastique, caractérisé par un support de montage (22) limitant l'empreinte de coulée de la pièce

coulée en matière plastique pour tenir de façon détachable une plaque de centrage (20) pour chaque élément de canal (34 ; 43) respectif dans la zone de l'ouverture de sortie avant de chaque canal à encre (14) et pour tenir de façon détachable un corps de maintien (12 ; 56) de chaque élément d'entraînement respectif (16 ; 41) à une position prédéterminée par rapport à la plaque de centrage (20) et à une position centrée par rapport à son élément de canal (34 ; 43).

2. Dispositif selon la revendication 1 caractérisé en ce que le corps de maintien (12 ; 56) comprend au moins un moyen de maintien pour un élément d'entraînement (16 ; 41) et un moyen de maintien pour l'élément de canal (34 ; 43) correspondant.

3. Dispositif selon la revendication 1 ou 2 caractérisé en ce que le corps de maintien (12 ; 56) a la conformation d'une plaque et il est prévu avec des éléments de serrage (13, 17 ; 40, 42, 44, 46, 48, 50) formés en saillie à partir du plan de la plaque pour chaque élément d'entraînement respectif (16 ; 41) et chaque élément de canal (34 ; 43) correspondant.

4. Dispositif selon l'une quelconque des revendications 1 à 3 caractérisé en ce qu'il est prévu pour chaque élément de canal (34 ; 43), en avant et/ou en arrière de l'espace prévu pour un élément d'entraînement correspondant (16 ; 41), une rainure de blocage en position centrée par rapport à l'élément d'entraînement (16 ; 41) à contenir.

5. Dispositif selon la revendication 3 ou 4 caractérisé en ce que, pour le maintien de chaque élément d'entraînement respectif (16 ; 41) à sa position prédéterminée des éléments de butée (19 ; 52, 54) en saillie à partir du plan de la plaque sont prévus avec un écartement relatif correspondant à la longueur de cet élément d'entraînement (16 ; 41).

6. Dispositif selon l'une quelconque des revendications 3 à 5 caractérisé en ce qu'il est prévu des deux côtés du corps de maintien (12) analogue à une plaque des éléments de serrage (13, 17) et des éléments de butée (19).

7. Dispositif selon l'une quelconque des revendications 3 à 6 caractérisé en ce que les éléments de serrage (13) sont conformés pour le maintien de plusieurs éléments d'entraînement (16) en parois dressées entre ces éléments d'entraînement (16).

8. Dispositif selon l'une quelconque des revendications 3 à 7 caractérisé en ce que les éléments de serrage (17) font partie, pour le maintien de plusieurs éléments de canal (34), d'une nervure marginale limitant le corps de maintien en avant et/ou en arrière des espaces prévus pour les éléments d'entraînement (16).

9. Dispositif selon l'une quelconque des revendications 1 à 8 pour la fabrication d'une tête d'imprimante à jets d'encre avec des canaux à encre disposés de façon convergente vers les ouvertures de sortie avant, caractérisé en ce que le corps de maintien (12) est conformé en segment d'un anneau circulaire à courbure correspondante à la convergence des éléments de canal (34).

10. Dispositif selon l'une quelconque des revendications 1 à 9 caractérisé en ce que le corps de maintien (12) présente, du côté du support de montage (22), des ouvertures d'enfichage pour la réception de broches de liaison (28).

11. Dispositif selon l'une quelconque des revendications 1 à 10 caractérisé en ce que le corps de maintien (12 ; 56) est une pièce transparente en matière plastique moulée par injection.

12. Dispositif selon l'une quelconque des revendications 1 à 11 caractérisé en ce que le support de montage (22) comprend un aimant permanent (30) pour tenir de façon détachable la plaque de centrage (20).

13. Dispositif selon l'une quelconque des revendications 1 à 12 caractérisé en ce que le support de montage (22) et la plaque de centrage (20) présentent des ouvertures alignées en correspondance pour la réception d'au moins une broche de centrage enfichable (32).

14. Dispositif selon l'une quelconque des revendications 1 à 13 caractérisé en ce que le support de montage (22) présente une cavité (36) dans la zone des parties extrêmes des éléments de canal (34) passant à travers les ouvertures de canal (38) de la plaque de centrage (20).

15. Dispositif selon l'une quelconque des revendications 1 à 14 caractérisé par une plaque de centrage (20) en nickel.

**0 145 880**

FIG. 1

FIG. 2

FIG. 3

FIG. 4

FIG. 5